Europäisches Patentamt

European Patent Office

Office européen des brevets

(19)

(11) EP 0 684 363 B1

(12)

# FASCICULE DE BREVET EUROPEEN

(45) Date de publication et mention
de la délivrance du brevet:
**15.09.1999 Bulletin 1999/37**

(51) Int Cl.⁶: **E21B 47/12**, G01V 1/40

(21) Numéro de dépôt: **95401092.2**

(22) Date de dépôt: **10.05.1995**

(54) **Méthode et système de transmission d'un signal de forage**

Verfahren und Anlage für Bohrsignalübertragung

Method and transmission system for a drill signal

(84) Etats contractants désignés:
**GB IT NL**

(30) Priorité: **24.05.1994 FR 9406247**

(43) Date de publication de la demande:
**29.11.1995 Bulletin 1995/48**

(73) Titulaire: **INSTITUT FRANCAIS DU PETROLE
92500 Rueil Malmaison (FR)**

(72) Inventeurs:
• **Pavone, Didier**
**F-95600 Eaubonne (FR)**
• **Froment, Jacques**
**F-77600 Bussy Saint Georges (FR)**
• **Thesee, Eddy**
**F-94000 Creteil (FR)**

(56) Documents cités:
**US-A- 4 599 567          US-A- 4 695 957**
**US-A- 4 974 187          US-A- 5 151 882**

• **GEOPHYSICS, FEB. 1982, USA, vol. 47, no. 2,
ISSN 0016-8033, pages 222-236, MORLET J ET
AL 'Wave propagation and sampling theory. II.
Sampling theory and complex waves'**
• **LAPPED TRANSFORMS FOR EFFICIENT
TRANSFORM/SUBBAND CODING, VOL. 6, NR.
38, PAGE(S) 969 - 978, XP 000138423 MALVAR H
S 'LAPPED TRANSFORMS FOR EFFICIENT
TRANSFORM/SUBBAND CODING'**

## Description

La présente invention concerne une méthode de transmission de signaux, notamment vibratoires, crées par la rotation d'un outil de forage.

Dans la technique de forage, qu'il soit à destination d'exploitation pétrolière ou autres destination, on utilise un outil de forage vissé sur des tubes dont l'ensemble est couramment appelé garniture de forage. La garniture de forage est le lien mécanique entre le fond du trou foré et la surface du sol. L'appareil de forage est l'installation de surface qui notamment entraîne en rotation l'outil de forage, assemble et supporte le poids de la garniture de forage, injecte un fluide dans la garniture de forage. Dans une variante, l'outil peut être entraîné en rotation par un moteur de fond assemblé dans la garniture de forage. Pour que l'outil puisse détruire la roche, il faut appliquer une force de compression sur l'outil, force appelée poids sur l'outil ou "weight on bit (WOB)". Pour cela, des masses-tiges ou "drill collar" sont assemblées au-dessus de l'outil. Des tiges de forage complètent la garniture de forage.

Le foreur qui conduit l'appareil de forage a la connaissance de quelques paramètres qui conditionnent l'action de l'outil de forage : le poids suspendu au crochet de forage, la vitesse de rotation et le couple appliqués par la table de rotation, le débit et la pression du fluide injecté. Ces paramètres, mesurés en surface, sont utilisés pour conduire le forage sans connaître les réelles conditions de travail de l'outil au fond du puits.

Il a été développé des appareils de fond pour effectuer des enregistrements et transmissions de mesures fournies par des capteurs de fond. Ces appareils couramment appelés MWD (Mesurement While Drilling) sont principalement destinés à transmettre vers la surface du sol la position géographique de l'outil de forage. Mais ils peuvent également comporter des capteurs d'effort qui mesurent les contraintes dans les masses-tiges situées au-dessus de l'outil.

Egalement, le document EP-A-0558379 décrit un système de mesures placé dans la garniture de forage, proche de l'outil, le système étant relié à la surface par au moins un conducteur électrique.

On connaît ainsi des moyens qui peuvent permettre l'acquisition de données relatives au comportement dynamique de la garniture de forage au cours de l'opération de forage.

Cependant, ces moyens de transmission sont complexes si le débit d'informations nécessaires est grand.

Il est donc très intéressant de pouvoir traiter les signaux afin de n'avoir à transmettre que l'information pertinente.

Pour conduire de façon optimisée la foration, il ne suffit pas de disposer des signaux représentatifs des comportements de l'outil de forage, mais d'interpréter ces signaux pour connaître le processus de la foration. En effet, les signaux de vibrations créées par l'outil de forage sont des signaux complexes qui peuvent fournir une bonne représentation du déroulement de l'opération de foration, opération qui n'est pas linéaire mais qui est une succession de phases et de comportements différents.

Un premier problème auquel on se heurte lorsque l'on est en présence de tels signaux, est la détection d'un comportement parmi les autres. Une fois ces comportements détectés, il sera alors envisageable de caractériser chaque comportement. Puis, la caractérisation une fois effectuée pourra permettre de reconnaître et de prédire des comportements donnés, d'effectuer des traitements ou des transmissions des coefficients caractéristiques seulement.

Dans certains cas de signaux, on pourra se contenter de segmenter celui-ci en segments d'une durée déterminée a priori, puis caractériser chaque segment selon la méthode selon l'invention. Une fois caractérisé, on pourra effectuer des analyses, des traitements ou des transmissions sur les coefficients de caractérisation. De plus, les moyens utilisés peuvent permettre de reconstruire le signal d'origine à partir des coefficients de caractérisation.

L'optimisation peut consister à interpréter les régimes vibratoires de la garniture de forage, en particulier au niveau des masses-tiges, pour détecter certains dysfonctionnements de l'outil de forage. Certains dysfonctionnements sont bien connus, comme le "stick-slip" où la rotation de l'outil est très irrégulière jusqu'au calage de l'outil, le "bit bouncing" où l'outil décolle du front de taille, le "whirling" où l'outil est animé d'un mouvement de précession désordonné. L'analyse des vibrations dues à la réaction de l'outil sur la roche peut aussi permettre la détection des changements de nature de roches, peut être même d'identifier la nature propre d'une roche, l'usure des taillants de l'outil ou le "bourrage" de l'outil (mauvais nettoyage des taillants).

Pour cela il faut une méthode d'analyse des signaux représentatifs des régimes vibratoires qui sont crées par le fonctionnement de l'outil.

Une des méthodes employées repose sur l'utilisation de la transformation de Fourier. Le signal est décomposé en une somme infinie de sinusoïdes. Mais quand il s'agit d'étudier des phénomènes non stationnaires, comme le sont les comportement de l'outil en forage, la transformation de Fourier est insuffisante. En effet, il apparait que c'est dans les parties non stationnaires du signal que se trouve l'information la plus pertinente.

La présente invention décrit une méthode de transmission notamment dans le but d'analyser et traiter des signaux de forage. Par signaux de forage il faut comprendre des signaux fournis par des capteurs placés dans la garniture de forage. Préférentiellement, ces capteurs seront placés proche de l'outil de forage pour éviter au mieux l'amortissement et le bruit. Mais dans certains cas il sera possible que certains capteurs soient placés proche de la surface du sol, ce qui facilite les transmissions des signaux.

Ainsi, la présente invention concerne une méthode de transmission d'au moins un signal associé à des conditions de forage et/ou du comportement d'un élément d'une garniture de forage comportant un outil de forage entraîné en rotation, ledit signal étant fourni par au moins un capteur placé dans ladite garniture de forage. Ladite méthode comporte les étapes suivantes :

- segmentation temporelle dudit signal par des moyens de segmentation,
- décomposition en ondelettes Temps-Echelle ou Temps-Fréquence par des moyens de calculs fournissant des coefficients d'ondelette de chaque segment,
- transmission d'au moins une partie desdits coefficients.

Les ondelettes Temps-Echelle peuvent être des ondelettes de Morlet, orthogonale, biorthogonale ou dyadique.

Les ondelettes Temps-Fréquence peuvent être des ondelettes de Malvar.

On peut sélectionner des coefficients caractéristiques de chaque segment.

Les coefficients caractéristiques peuvent être les maxima locaux desdits coefficients d'ondelette.

Les coefficients caractéristiques peuvent être les coefficients les plus énergétiques de chaque segment.

On peut effectuer une étape de quantification des coefficients à transmettre.

On peut reconstruire au moins partiellement le signal d'origine à partir desdits coefficients.

Les moyens de segmentation, de calculs et de transmission peuvent être situés dans le voisinage du capteur et la transmission peut avoir lieu entre lesdits moyens et la surface du sol.

On peut effectuer un codage binaire desdits coefficients et la transmission peut être effectuée par pulsations dans un fluide ou par onde électromagnétique.

L'invention concerne également un système de transmission d'au moins un signal associé à des conditions de forage et/ou du comportement d'un élément d'une garniture de forage comportant un outil de forage entraîné en rotation, ledit signal étant fourni par au moins un capteur placé dans ladite garniture de forage. Le système comporte:

- des moyens de segmentation dudit signal,
- des moyens de calculs fournissant des coefficients d'ondelette de chaque segment par décomposition en ondelettes Temps-Echelle ou Temps-Fréquence,
- des moyens de transmission d'au moins une partie desdits coefficients.

Le système peut comporter des moyens de codage en binaire desdits coefficients, lesdits moyens de segmentation, de calculs, de transmission et de codage étant dans le voisinage du capteur.

Il faut noter que pour la mise en oeuvre de l'invention, la segmentation du signal initial peut être simplement un découpage temporel d'une durée déterminée, par exemple des segment de 30 secondes. Bien entendu, le signal reconstruit ne sera pas optimal du point de vue conservation des informations, mais dans beaucoup de cas la reconstruction imparfaite pourra suffire.

Mais si l'on veut perfectionner, le traitement des signaux peut comporter l'étape de découper le signal en segments homogènes.

Par segment homogène, il faut comprendre une séquence d'une durée déterminée ayant des caractéristiques communes ou représentatives d'un même événement ou comportement.

Dans une autre étape, on peut caractériser des segments homogènes ou non, par le calcul de coefficients liés au segment de signal et on sélectionne les coefficients représentatifs de l'information contenue dans ledit segment.

On pourra transporter ces coefficients représentatifs entre la zone d'acquisition et de caractérisation du signal et une zone d'analyse du signal, cette dernière zone étant éloignée de la première.

On pourra classifier et identifier le comportement représenté par le signal en analysant les caractéristiques du signal segmenté en comparant avec une base de données ou selon des critères de classification déterminés en fonction des conditions.

La présente invention repose notamment sur l'application à un signal de forage de la transformation en ondelettes connue sous le nom "ondelettes de Morlet" et de la Transformation en Cosinus Locale ou "ondelettes de Malvar". Cependant d'autres types d'ondelette conviennent à l'application présente.

On pourra consulter les ouvrages cités dans l'annexe jointe à la description où la théorie des ondelettes utilisée dans la présente invention est décrite.

L'invention sera mieux comprise et ses avantages apparaitront clairement à la lecture de la description des exemples, nullement limitatifs, illustrés par les figures annexées dans lesquelles :

- les figures 1A et 1B montrent des moyens d'acquisition d'un signal de forage,

- la figure 2 montre un exemple d'un signal de forage,
- les figures 3A et 3B montrent la segmentation du signal de forage et la matérialisation des coefficients caractéristiques de chaque segment,
- la figure 4 montre une partie du signal reconstruit.

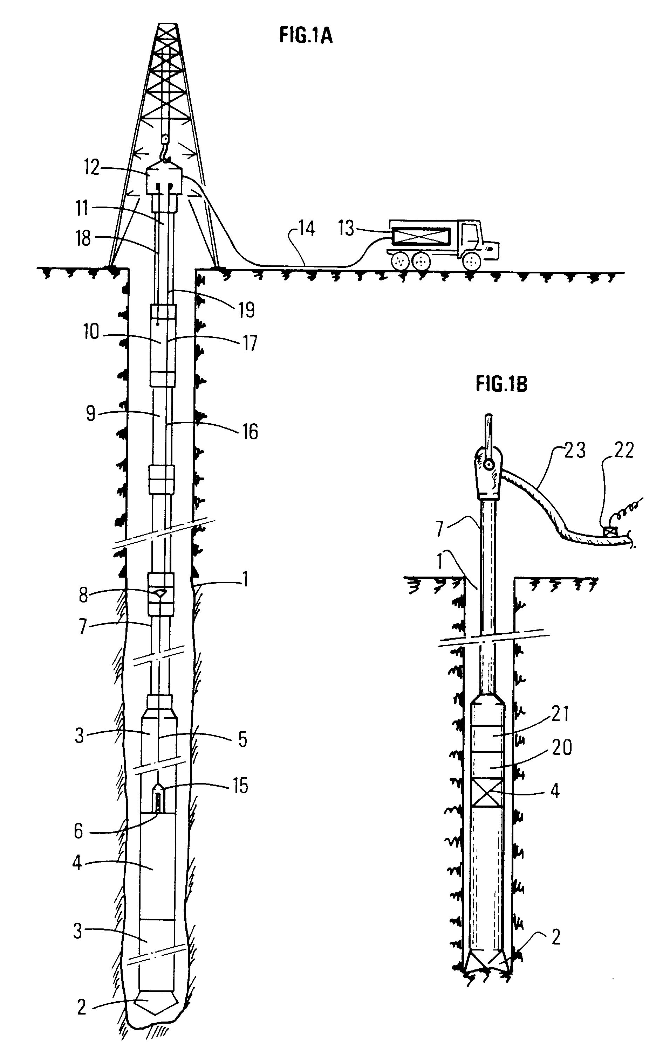

La figure 1A montre de moyens d'acquisition et de transmission de signaux de forage. Ce moyen est décrit dans le document EP-0558379.

La référence 2 désigne l'outil de forage descendu à l'aide de la garniture dans le puits 1. Des masses-tiges 3 conventionnelles sont vissées au dessus de l'outil. Le premier moyen de mesure est constitué par un raccord 4, généralement placé au-dessus de l'outil 2 où les mesures à proximité de l'outil sont plus intéressantes, notamment pour suivre la dynamique de l'outil. On pourra cependant, le placer au sein ou au sommet des masses-tiges, ou même au niveau des tiges de forage.

La garniture de forage est complétée par des tiges conventionnelles 7 jusqu'au raccord de suspension et de connexion 8. Au dessus de ce raccord, l'allongement du train de tiges se poursuit en ajoutant des tiges câblées 9.

Les tiges câblées 9 ne seront pas décrites dans ce document, car elles sont connues de l'art antérieur, notamment par les brevets FR-2530876, US-4806115 ou la demande FR-2656747.

Un deuxième moyen de mesure placé dans un raccord 10 est vissé sous la tige d'entraînement 11 ou "kelly". Les ajouts de tiges câblées se faisant alors sous ce raccord 10. Au-dessus de la tige d'entraînement 10 se trouve un raccord électrique tournant 12, lequel est électriquement connecté à l'installation de surface 13 par un câble 14.

Dans le cas où l'appareil de forage est équipé d'une tête d'injection motorisée, communément dénommée "power swivel", il n'y a pas de tige d'entraînement et le raccord de mesure 10 est vissé directement sous le raccord tournant 12, lequel se situe sous la tête d'injection motorisée.

Le raccord de mesure 4 comporte un connecteur mâle 6, dont les contacts sont reliés aux capteurs de mesure et à l'électronique associée incluse dans le raccord 4.

Un câble 5, équivalent à un câble de diagraphie différée, comporte à sont extrémité inférieure un connecteur femelle 15 adapté à coopérer avec le connecteur 6. L'autre extrémité supérieure du câble 5 est suspendue sur le raccord 8. Le raccord 8 est adapté à suspendre la longueur de câble 5 et à relier électriquement le ou les conducteurs du câble 5 avec la ou les liaisons électriques de la tige câblée immédiatement supérieure. La liaison électrique fournie par les tiges câblées est référencée 16. Cette liaison électrique transite en 17 dans le deuxième raccord de mesure 10.

Lorsque l'on utilise une tige d'entraînement 11, celle-ci est également câblées en comportant deux câbles électriques 18 et 19. L'un, 18, relie le deuxième raccord 10 aux contacts tournant du raccord tournant 12, l'autre, 19, relie la ligne 17 à d'autres contacts tournant du raccord 12.

Le raccord électrique tournant 12 peut comporter 12 pistes. Il est conçu pour respecter les normes d'antidéflagrance exigées dans l'environnement d'un plancher de forage.

Le câble de surface 14 peut comporter au moins six conducteurs.

Le raccord 4 est en général relié par un mono conducteur jusqu'à l'installation de surface 13. Les mesures et l'alimentation en énergie électrique transitent par la même ligne.

Le moyen de mesure du raccord 4 comporte de préférence des capteurs pour mesurer, seul ou en combinaison:

- le poids sur l'outil,

- le couple réactif à l'outil de forage,

- les moments fléchissants suivant deux plans orthogonaux,

- les accélérations suivant trois axes orthogonaux dont l'un est confondu avec l'axe longitudinal de la garniture de forage,

- les température et pression à l'intérieur et à l'extérieur de la garniture,

- l'accélération en rotation,

- les composantes du champ magnétique.

Les trois premières mesures peuvent être obtenues par des jauges de contraintes collées sur un cylindre d'épreuve. Elles sont protégées de la pression par un carter approprié. La conception et le montage de ce carter sont adaptés à éviter les erreurs de mesure dues aux rendements.

Les accélérations sont mesurées par deux accéléromètres par axe afin de contrôler les erreurs induites par la dynamique de la rotation.

Le dernier jeu de mesure est obtenu par des capteurs spécifiques montés dans une partie séparée du raccord.

Le deuxième moyen de mesure du raccord de mesure 10 comporte de préférence, seul ou en combinaison, des capteurs de mesure de :

- tension,

- torsion,

- accélération axiale,

- pression interne ou pression de refoulement aux pompes,

- accélération en rotation.

La conception de ce raccord de surface 10 n'est pas fondamentalement différente de celle du premier raccord, si ce n'est l'obligation de laisser libre un passage de boue disposé sensiblement coaxial à l'espace intérieur de la garniture pour permettre, si nécessaire, le transfert d'un outil à l'intérieur de la garniture.

Dans une variante du système d'acquisition, une haute fréquence de transmission des mesures est obtenue par des liaisons électriques constituées par le câble 5, la ligne 16 et 17, et le câble de surface 14. Certains capteurs de fond qui ne nécessitent pas d'échantillonnage haute fréquence, pourront transmettre leurs mesures par d'autres voies, par exemple onde de pression ou onde électromagnétique.

Le raccord 4 peut comporter l'électronique nécessaire pour compacter l'information fournie par au moins un signal de forage. Les coefficients caractéristiques de segments de signal peuvent être alors transmis soit par le conducteur électrique du dispositif de la figure 1, soit par onde de pression ou onde électromagnétique ou par tout autre moyen de transmission adaptés.

Egalement le raccord 4 peut comporter les moyens électroniques de segmentation automatique en segments homogènes, et des moyens de sélection des segments caractéristiques d'un comportement du forage déterminé, comportement qui sera porté à la connaissance de l'opérateur après transmission à la surface des coefficients caractéristiques.

La figure 1B montre une installation de forage conventionnelle dans laquelle on a incorporé aux masses-tiges un raccord de mesure 4 qui enregistre au moins un signal de forage, une installation électronique 20 comportant les moyens de compaction du signal, une installation 21 de codage et de transmission à la surface des coefficients caractéristiques du signal. La transmission peut être par ondes de pression dans la colonne de fluide à l'intérieur de la garniture de forage. Un capteur de pression 22 placé sur la conduite d'injection 23 de surface transmet les ondes de pression à une installation de traitement de surface qui : décode les ondes de pression pour obtenir les coefficients caractéristiques. L'installation de surface peut identifier le comportement en fonction d'une base de données ou des consignes particulières, ou reconstruire le signal pour donner par exemple des mesures analogiques à l'opérateur.

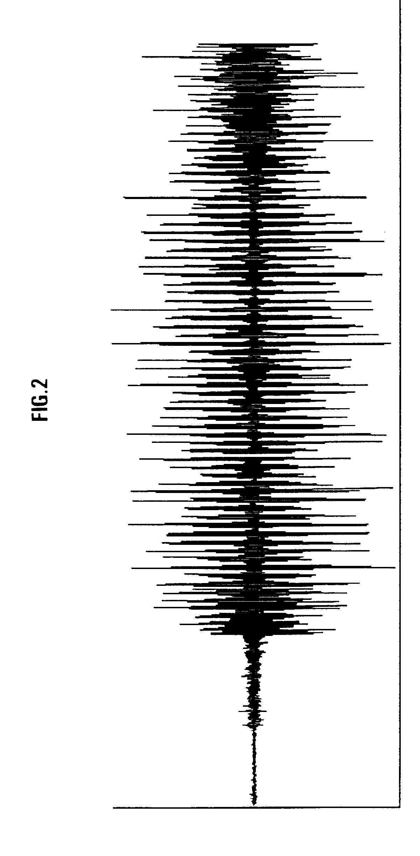

La figure 2 montre un exemple de signal de forage en fonction du temps t.

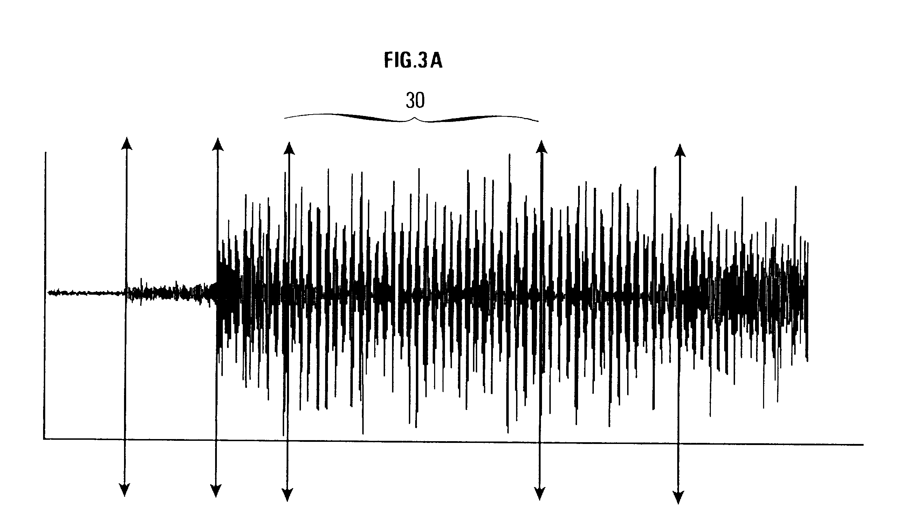

La figure 3A montre la segmentation du signal obtenue par exemple par le traitement par les ondelettes.

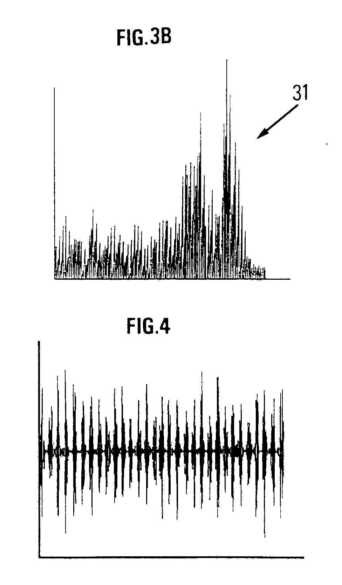

Le segment 30 a été décomposé par ondelette selon l'invention. Les coefficients d'ondelette sont représentés figure 3B par des lignes verticales 31.

La figure 4 illustre la reconstruction du segment 30 à partir de certains coefficients matérialisés par les lignes 31.

**ANNEXE**

La présente invention repose sur l'application à un signal de forage d'une transformation en ondelettes temps-échelle et d'une transformation en ondelettes temps-fréquence.

Les ouvrages suivants fournissent un complément d'informations et de plus amples développements à propos des concepts manipulés :

(1) R. Coifman, V. Wickerhauser, "Entropy-based Algorithms for Best Basis Selection", IEEE Transactions on Information Theory. Vol. 38, N° 2, March 1992.

(2) M. Holschneider, R. Kronland-Martinet, J. Morlet, Ph. Tchamitchian, "A Real Time Algorithm for signal Analysis with the Help of Wavelet Transform", in Wavelets, Time-Frequency Methods and Phase Space, J.M. Combes, A.

Grossmann and Ph. Tchamitchian, eds. Berlin : Springer, ITPI 1989 pp. 286-297.

(3) H. Malvar, "Lapped Transforms for Efficient Transform/Subband Coding". IEEE Transactions on Acoustics, Speech, and Signal Processing, 38:969-978, 1990.

(4) J. Morlet, A. Grossmann, "Reading and Understanding Continuous Wavelet Transform".

(5) K. R. Rao, P. Yip, "Discrete Cosinus Transform", Academic Press, New York, 1990.

L'utilisation des techniques d'ondelettes peut être vu comme une alternative par rapport aux méthodes basées sur la transformation de Fourier. Ces dernières montrent en effet leurs limites quand il s'agit d'étudier des phénomènes non stationnaires (début ou fin d'évènements, ruptures, modulations...). La transformation de Fourier présente la particularité de délocaliser l'information le long de la variable temporelle, ce qui peut se révéler très pénalisant dans l'étude d'un signal non stationnaire. Car c'est principalement dans les parties non stationnaires que se trouve l'information pertinente. Ces parties sont en général limitées dans le temps, mais possèdent un large spectre fréquentiel. Tout l'apport des ondelettes sera donc de permettre une étude plus localisée du signal tant en variable temporelle qu'en variable de Fourier.

Une transformation en ondelettes consiste en la décomposition d'un signal sur des fonctions qui vibrent comme des sinusoïdes sur une certaine plage de temps et qui s'amortissent très fortement en dehors. Une telle analyse se construit à partir d'une fonction $\psi(x)$ appelée ondelette mère ou ondelette analysante, vérifiant la définition suivante :

**Définition 1** :

Une fonction $\psi$ à valeur dans $\mathbb{R}$ ou dans C est une ondelette si elle est à support compact (ou à décroissance rapide à l'infini) et si elle vérifie la condition essentielle suivante :

$$\int_{-\infty}^{+\infty} \psi(x)dx = 0 \qquad (1)$$

Dans le calcul de la transformée, il n'y a pas de multiplication par des sinus ou des cosinus (comme dans les méthodes dérivées de la transformation de Fourier). A partir de l'ondelette mère, on génère par translations et par dilatations une famille d'ondelettes

$$\psi_{a,b}(x) = a^{-1/2} \ \psi \left(\frac{t-b}{a}\right) \ a > 0, \ -\infty \ < b < + \ \infty$$

Ces ondelettes sont les éléments de base qui serviront à la construction de l'analyse. Le paramètre a donne la largeur moyenne de l'ondelette et le paramètre b sa position. Les coefficients d'ondelette d'une fonction $f(x)$ de la variable réelle x, ou d'un signal s(t) (t étant une variable temporelle) sont les produits scalaires définis par la formule :

$$W_f \ (a,b) \ = \ <f, \psi_{a,b}> = \int_{\mathbb{R}} \ f(x) \ \overline{\psi_{a,b}}(x) \ dx \qquad a > 0, -\infty \ < b < + \ \infty \qquad (2)$$

On peut faire ici la remarque suivante :
Soit

$$\psi_a(x) = \frac{1}{\sqrt{a}} \ \psi\left(\tfrac{x}{a}\right) \ \text{(dilatation sans translation)}$$

et $\tilde{\psi}_a(x) = \psi_a(-x)$ alors

$$f * \tilde{\psi}_a(b) = \int_{\mathbb{R}} f(x)\tilde{\psi}_a(b-x)dx = W_f(a,b)$$

Une transformation en ondelette consiste donc en un filtrage de *f* par des filtres passe-bande de réponse impulsionnelle $\tilde{\psi}_a$.

Soit

$$K_\psi = \int_{\mathbb{R}} \frac{|\hat{\Psi}(\omega)|^2}{\omega} \, d\omega.$$

Dans le cas où $K_\psi < +\infty$, on peut reconstruire le signal à partir de sa décomposition en appliquant la formule suivante :

$$f(x) = \frac{1}{K_\psi} \int_{\mathbb{R}^2} W_f(a,b)\psi_{a,b}(x) \, \frac{dadb}{a^2} \qquad (3)$$

$K_\psi$ joue le rôle de coefficient normalisateur.

L'analyse en ondelettes fournit donc un outil pour mesurer les fluctuations locales d'une fonction *f*, autour d'un point b, à une échelle a en même temps qu'une méthode de reconstruction à partir de ces coefficients de fluctuation.

La transformée en ondelettes, par sa définition même, est plus une représentation temps-échelle que temps-fréquence. Cependant, puisqu'elle est identifiable à un filtrage passe-bande, la transformée en ondelettes peut généralement admettre une interprétation temps-fréquence en considérant que la variation du paramètre d'échelle a permet d'explorer l'axe des fréquences. C'est en particulier le cas pour des ondelettes "raisonnablement" localisées en fréquence autour d'une valeur $\nu_0$. Il existe alors la possibilité d'une interprétation temps-fréquence, moyennant l'identification formelle $\nu = \nu_0/a$.

### 0.1 Utilisation

La formule de la version continue de la transformation en ondelettes donnée par l'équation (2) ne peut être utilisée directement pour réaliser une implémentation. En général, l'analyse d'un signal se fait sur un nombre d'échelles qui varie entre 8 et 12 octaves. Le procédé nécessite donc l'utilisation d'un algorithme rapide pour réduire la complexité des opérations et rendre les calculs envisageables. De tels algorithmes sont réalisés à partir de versions discrètes de la transformée en ondelettes. Mais il existe différentes manières d'envisager cette discrétisation qui dépendent essentiellement de la façon dont sont traitées les variables temporelle et d'échelle.

"L'algorithme à trous" décrit dans ce document utilise par exemple la version discrète :

$$S(n,m) = \delta a_0^{-\frac{m}{2}} \sum_k s(k\delta)\bar{g}(a_0^{-m}(k-n)\delta) \qquad (4)$$

$\delta$ étant l'inverse de la fréquence d'échantillonnage du signal. Cet algorithme, en réduisant la complexité des convolutions (mesurée par la taille du filtre par lequel on convolue) à l'aide de factorisation, permet l'utilisation efficace de la discrétisation (4).

En étudiant la structure de pavage du plan associée à la transformée en ondelettes, on s'aperçoit que cette dernière est d'autant plus serrée en temps que le point d'évaluation est à plus haute fréquence, l'utilisation d'une grille non uniforme :

$$\{ (t,a) = (nt_0 a_o^m, a_o^m) ; t_0 > 0, a_0 > 0; n,m \in \mathbf{Z}\}$$

permet de définir la transformée en ondelettes discrète par:

$$D_X[n,m] = a_o^{m/2} \int_{-\infty}^{+\infty} f(s) \overline{\psi}(a_o^m s - n\,\delta\,t)ds; \quad n,m \in \mathbf{Z}$$

Le choix $a_o = 2$ correspond à une décomposition en échelle dyadiques (une série de coefficient par octave).

En résumé, l'analyse d'un signal se fera selon le schéma suivant :

- acquisition du signal de forage;
- application de l'algorithme de décomposition,
- fixer le pourcentage des coefficients les plus forts à prendre en compte lors de la reconstruction;
- retrouver le signal original avec la formule de transformation inverse à partir des coefficients sélectionnés.

### 0.2 L'algorithme à trous

Voici une brève présentation d'un des algorithmes implémentant une transformation en continue. Cet algorithme appelé algorithme à trous repose sur le principe suivant : dans le calcul des coefficients, on remplace l'ondelette analysante g par une autre ondelette, construite à partir de la précédente par interpolation (grâce à un filtrage) entre des points constituant l'échantillonnage initial de g. Cette méthode ne peut être réalisée en pratique que grâce à une simplification des produits de convolution à calculer.

Soient D et I les opérateurs de dilatation et d'inversion. La transformation en ondelettes d'un signal s par rapport à une ondelette g(t), peut s'écrire sous la forme du produit de convolution suivant :

$$S_a = S(.,a) = K_{ga}s \text{ avec } g_a = D_a I \bar{g} \tag{5}$$

Considérons l'opérateur d'échantillonnage P, qui à une suite s(t) $t \in \mathbb{R}$ associe la suite s(n) $n \in \mathbf{Z}$. A partir de l'équation (5), on peut alors écrire :

$$S_a = K_{g_a}s \text{ avec cette fois } g_a = PD_a I \bar{g} \tag{6}$$

Les itérations du calcul font que l'on doit disposer d'un échantillonnage de la dilatée de l'ondelette de départ. Pour réduire la complexité des convolutions avec les ondelettes dilatées on les factorise en convolutions avec des filtres plus petits.

Cette opération est réalisée de la manière suivante :

- Construction d'un opérateur O tel que

$$O^n Pg = P(D_2)^n g, \quad n \in \mathbf{N}. \tag{7}$$

$$\underbrace{\underbrace{O^n}_{\text{suite}} \underbrace{Pg}_{\text{suite}}}_{\text{suite}} = \underbrace{\underbrace{P}_{\text{fonction}} \underbrace{(D_2)^n g}_{\text{suite}}}_{\text{}}$$

Prendre $O = D_2$ donc $(D_2 g)(n) = 0$ pour tout n impair.

Il sera plutôt appliqué une procédure d'interpolation (pour plus de détails se reporter à la bibliographie), avec l'opérateur $O = D_2 + TD_2 K_F$, donnant des valeurs non systématiquement nulles aux positions impaires.

- Simplification des convolutions
  La convolution par $(O^n.g)$ est factorisée en convolutions plus simples

$$K_O n_g = \alpha^n K_{g_n} K_{F_1} \dots K_{F_n} \text{ avec } \alpha = 2^{-1/2}$$

et

$$g_n = (\alpha^{-1} D_2)^n g$$

$$F_{i+1} = (\alpha^{-1} D_2)F_i$$

A partir du résultat précédant, le calcul de la transformée sur N octaves se fait alors selon le schéma suivant :

$$S_{a=1} = K_g s \qquad \text{(octave 0)}$$

$$F_1 = 1 + T(\alpha^{-1}D_2)F \qquad X_1 = \alpha K_{F_1} s$$
$$g_1 = \alpha^{-1}D_2 g \qquad\qquad S_{a=2} = K_{g_1} X_1 \qquad \text{(octave 1)}$$

$$F_2 = \alpha^{-1}D_2 F_1 \qquad X_2 = \alpha K_{F_2} X_1$$
$$g_2 = \alpha^{-1}D_2 g_1 \qquad S_{a=2^2} = K_{g_2} X_2 \qquad \text{(octave 2)}$$

$$\dots \qquad\qquad \dots \qquad \dots$$
$$\vdots \qquad\qquad \vdots \qquad \vdots$$

$$F_N = \alpha^{-1}D_2 F_{N-1} \qquad X_N = \alpha K_{FN} X_{N-1}$$
$$g_N = \alpha^{-1}D_2 g_{N-1} \qquad S_{a=2^N} = K_{g_N} X_N \qquad \text{(octave N)}$$

## La transformée sur plusieurs voix

Dans ce cas, une restriction de S(b,a) à un ensemble de valeurs discrètes du paramètre d'échelle a sera considérée. Une telle restriction $S(b, a_i)$ est appelée une voix. Deux voix consécutives forment un rapport constant $a_i / a_{i+1}$. La situation la plus répandue étant celle où $a_j = a_o 2^{j/nv} = 2^{no+k/nv}$, le nombre entier nv définissant le nombre de voix par octave, j le numéro de la voix dans l'analyse, no le numéro de l'octave et k le numéro de la voix dans l'octave. Il s'agit donc des valeurs intermédiaires prises pour passer de $a = 2^j$ à $a = 2^{j+1}$. Une division en 12 voix par octave semble être satisfaisante pour approcher la continuité sur l'axe des échelles (par analogie avec les distributions tempérées).

Puisque l'on veut considérer nv voix dans chaque octave, l'implémentation se fait en superposant nv versions de l'algorithme correspondant à nv ondelettes différentes (des versions dilatées de l'ondelette de départ). En effet, les rapports entre les $a_i$ étant constants, le rapport entre la $k^{ième}$ voix de l'octave $O_i$ et la $k^{ième}$ voix de l'octave $O_j$ sera le même que celui entre $n^{ième}$ voix de l'octave $O_i$ et la $n^{ième}$ voix de l'octave $O_j$. On calculera donc l'ondelette pour les nv premières dilatations (correspondant donc aux nv voix de l'octave 0), et on appliquera alors le schéma précédent avec à chaque fois une ondelette de départ, $g_v$, différente définie par:

$$g_v(t) = \frac{e^{i\omega_0 t} e^{\frac{-t^2}{2}}}{\sqrt{2^{\frac{v-1}{nv}} \times \delta}} \quad t \in [Maxi_v, Mini_v]$$

Soit [In$f$-Wave, Sup-Wave] l'échantillonnage de base de l'ondelette, c'est-à-dire l'intervalle sur lequel varie t quand on calcul g(t).

Alors les intervalles d'échantillonnage [$Maxi_v$,$Mini_v$] pour les versions dilatées seront calculées de la manière suivante :

a. Calcul de $Maxi_v$ : $2^{v-1/nv} \times In f$-Wave
b. Calcul de $Mini_v$:$2^{v-1/nv} \times In f$-Wave
c. Définition des points de calcul de l'ondelette :
Soit $fe$ la fréquence d'échantillonnage du signal à analyser, posons Freq = $fe$/2 (c'est la fréquence maximale analysée). Alors l'ondelette sera calculée aux points t = ja$\delta$/$fe$ avec a = $2^{v-1/nv}$, j étant un point de l'intervalle d'échantillonnage (c'est-à-dire que j varie de Mini à Maxi), et $\delta$ = $2\omega_o$/Freq.

En effectuant une transformation en ondelettes, on passe d'un signal unidimensionnel s(t) à un signal bidimensionnel S(n,m). C'est-à-dire une suite de signaux unidimentionnels (une suite de coefficients pour chaque valeur du paramètre de dilatation). La lecture de ces signaux peut se révéler très difficile si on ne dispose pas d'un mode de représentation approprié.

Dans le but de faciliter l'interprétation des résultats obtenus, les coefficients ne seront pas directement utilisés en tant que tels. On choisira, par exemple, de les considérer comme les pixels d'une image indexées par les paramètres n (paramètre temporel) et m (paramètre d'échelle). Les petites échelles, représentant les hautes fréquences, se trouvent en haut de l'image et les grandes échelles, pour les fréquences plus basses, sont en bas de l'image (l'article [4] apporte plus de précisions quant à l'interprétation de ces images). Le passage d'un coefficient de la transformée à un niveau de gris se fait en projetant l'intervalle (Coe$ff$_Min, Coe$ff$_Max] dans [0,255]. L'introduction d'un coefficient de saturation est parfois nécessaire pour pouvoir exploiter parfaitement les images obtenues.

Cette image possède donc autant de colonnes qu'il y a de points dans le signal de départ, ce qui facilite d'autant l'interprétation. En effet, il suffit de juxtaposer l'image et le signal pour se faire une idée des comportements en jeux.

Pour chaque signal, on obtient donc une image représentant les analyses aux différentes échelles. L'interprétation est beaucoup plus simple puisque l'on dispose de toute l'information directement sur l'image. De plus, cette image permet de se faire une première idée du signal que l'on doit traiter et de donner une première appréciation quant à sa caractérisation.

## 1 Ondelettes temps-fréquence

L'analyse temps-échelle (encore appelée algorithme multirésolution) repose sur l'utilisation d'une gamme étendue d'échelles pour analyser le signal. Et, bien qu'elle soit interprétable d'un point de vue fréquentiel, elle n'offre pas une très grande précision dans ce domaine.

Pour palier cet inconvénient, nous présentons une seconde méthode d'analyse conduisant directement à un algorithme de segmentation et reposant sur l'utilisation d'ondelettes temps-fréquence appelées ondelettes de Malvar. L'analyse par les ondelettes de Malvar s'inscrit dans le cadre général de la transformée de Fourier à fenêtre. Les ondelettes de Malvar permettent de réaliser une analyse fréquentielle locale du signal, tout en minimisant les artefacts qui accompagnent généralement de tels algorithmes.

### 1.1 Description de l'algorithme

Cette méthode prend appuie sur la transformée en cosinus locale d'un signal ou "ondelettes de Malvar". Elle permet de disposer d'une représentation spectrale inversible, autorisant une reconstruction parfaite, ainsi qu'un outil de compression de données très efficace.

Soit

$$\mathbb{R} = \bigcup_{j \in \mathbb{Z}} I_j$$

une partition de la droite réelle.
Avec $I_j = [a_j,a_{j+1}[$ un intervalle de longueur supérieure ou égale à $\varepsilon$ ($\varepsilon > 0$ fixé).

Soit $b_j$ la fenêtre suivante :

$$
b_j = \begin{cases} \beta\left(\dfrac{t-a_j}{r}\right) & t \in \left[a_j - r, a_j + r\right[ \\[2mm] 1 & t \in \left[a_j + r, a_{j+1} - r\right[ \\[2mm] \beta\left(\dfrac{a_{j+1}-t}{r}\right) & t \in \left[a_{j+1} - r, a_{j+1} + r\right[ \\[2mm] 0 & t \in \left]-\infty, a_j - r\right] \cup \left[a_{j+1} + r, +\infty\right[ \end{cases}
$$

avec

$$
\beta(t) = \sin\left(\left[\frac{\pi}{4}\left(1 + \sin\left(\frac{\pi}{2}t\right)\right)\right] \text{ et } r \le \inf_{j \in \mathbf{Z}}(a_{j+1} - a_j)\right.
$$

La famille de fonctions suivante :

$$
\Psi_k^j = b_j(t)\frac{\sqrt{2}}{\sqrt{|I|}}\cos\left(\frac{\pi}{|I|}\left(k+\frac{1}{2}\right)(t-a_j)\right)
$$

avec $j \in \mathbf{Z}$, $k \in \mathbb{N}$ est alors une base orthonormale de $\mathbf{L}^2(\mathbb{R})$. Cela signifie que tout signal $S(t) \in \mathbf{L}^2(\mathbb{R})$ peut s'écrire :

$$
S(t) = \sum_{\substack{j \in Z \\ k \in N}} c_k^j \Psi_k^j(t)
$$

avec

$$
c_k^i = \left\langle S(t), \Psi_k^j(t) \right\rangle \tag{8}
$$

et

$$
\|S(t)\|^2 = \sum_{\substack{j \in Z \\ k \in N}} \left|c_k^j\right|^2
$$

Cette décomposition offre une représentation spectrale complète et non redontante. La suite des coefficients

$$
c_k^j = \left\langle S(t), \Psi_k^j(t) \right\rangle
$$

pour $k \in \mathbb{N}$, étant le spectre local de S sur l'intervalle $I_j$.

Il est possible de calculer plusieurs transformées locales en même temps, en divisant les intervalles par deux récursivement. Les fonctions de bases pour chaque intervalle sont la somme directe des bases des deux sous-intervalles. Le produit de convolution (8) peut être calculé en utilisant une transformée en cosinus rapide. Ce calcul est précédé d'une étape appelée "repliement" (ou "folding").

Soient

$$f(t) = \begin{cases} \sin(\frac{\pi}{4}(1+\sin(\frac{\pi}{2}t))) & \text{si} \ -1<t<1 \\ 0 & \text{si} \ t<-1 \\ 1 & \text{si} \ t>1 \end{cases}$$

et

$$f_j(t) = \begin{cases} f\left(\dfrac{t-a_j}{r}\right) & \text{si} \ a_j-r<t<a_j+r \\ 0 & \text{si} \ t<a_j-r \\ 1 & \text{si} \ t>a_{j+1} \end{cases}$$

L'opérateur suivant :

$$U_jS(t) = \begin{cases} f_j(t)S(t) + F_j(2a_j-t)S(2a_j-t) & \text{si } a_j \leq t \\ f_j(2a_j-t)S(t) - f_j(t)S(2a_j-t) & \text{si } a_j > t \end{cases}$$

est appelé opérateur de folding. Appliquer cet opérateur à un signal $S(t)$ revient à lui associer un ensemble de signaux $S_j(t) \in \mathbb{L}^2 (I_j)$, $j \in \mathbb{Z}$ tel que :

$$S_j(t) = \begin{cases} U_jS(t) & \text{si} & t \in [a_j, a_j+r] \\ S(t) & \text{si} & t \in [a_j+r, a_{j+1}-r] \\ U_{j+1}S(t) & \text{si} & t \in [a_{j+1}-r, a_{j+1}] \end{cases}$$

Posons

$$\varnothing_k^j(t) = \frac{\sqrt{2}}{\sqrt{|I|}}\cos(\frac{\pi}{|I|}(k+\frac{1}{2})(t-a_j))1_j(t)$$

(où) $1_j(t)$ est l'indicatrice de l'intervalle $I_j$), les

$$\left\{\varnothing_k^j\right\}k \in \mathbb{N},$$

appelés ondelettes de Malvar, étant une base orthonormale de $\mathbb{L}^2 (I_j)$ alors :

$$S_j(t) = \sum_{k \in Z} c_k^j\varnothing_k^j(t)$$

Les coefficients

$$c_k^j = \left\langle S_j(t), \varnothing_k^j(t) \right\rangle$$

forment donc un spectre local sur $I_j$.

De plus, ce spectre local sur $I_j$ peut être représenté dans la base des

$$\left\{ \Psi_k^j(t) \right\}_{k \in \mathbb{N}},$$

on a l'égalité suivante :

$$c_k^j = \left\langle S_j(t), \varnothing_k^j(t) \right\rangle = \left\langle S(t), \Psi_k^j(t) \right\rangle.$$

Donc, appliquer la transformée en cosinus aux $S_j(t)$ revient à calculer tous les produits de convolution avec les fonctions $\psi_k^j$.

L'opération de repliement permet de prendre en compte les bords en évitant les biais des recouvrements dans le calcul de la transformée, ou l'apparition dans l'analyse de discontinuités qui ne seraient pas imputable au signal mais aux cassures brutales imposées par des fenêtres insuffisament douces. De manière réciproque, on peut définir l'opération de "dépliement" (ou unfolding) qui entre en jeu lors de la reconstruction.

Soit S(t) un signal donné, on commence par réaliser un "repliement" aux bords (on obtient ainsi $S^o(t)$). Puis de façon récursive au centre du signal obtenu (on replie en quelque sorte le signal sur lui-même).

A chaque niveau, on associe donc à S(t) un ensemble de fonctions

$$\left\{ S_j^l(t) \right\}$$

sachant que:

$$S_j^l(t) \in \mathbb{L}^2 \left( I_j^l \right)$$

donne au niveau suivant

$$S_{2j}^{l+1}(t) \in \mathbb{L}^2 \left( I_{2j}^{l+1} \right) \quad \text{et} \quad S_{2j+1}^{l+1}(t) \in \mathbb{L}^2 \left( I_{2j+1}^{l+1} \right) ,$$

(l étant le niveau dans la décomposition).

Il est alors possible de calculer la transformée (par l'algorithme classique DCT-IV) pour chaque $S_j^l$ ce qui donne les spectres locaux $d_j^l$ correspondants.

Un résultat important est le suivant :

$$\|S\|^2 = \|S^o\|^2 = \left\|S^j\right\|^2 \underline{\underline{def}} \sum_k \left\|S_k^j\right\|^2 \; ; \; \left\|S_k^j\right\|^2 = \left\|d_k^j\right\|^2$$

Ce qui signifie qu'il y a conservation de l'énergie.

## 1.2 La segmentation adaptive

L'algorithme de Malvar n'effectue pas une segmentation, il décompose le signal sur une fenêtre de taille donnée. Il peut être intéressant d'adapter la fenêtre aux caractéristiques locales du signal (fenêtres larges pour les zones stationnaires, et courtes pour les transitions) en utilisant un algorithme de croissance des fenêtres par regroupement.

Cette modification s'effectue en agissant sur les valeurs ($a_j$) qui servent à définir les segments $I_j$. La modification élémentaire consiste à réunir deux intervalles [$a_{j-1}, a_j$] et [$a_j, a_{j+1}$] en supprimant le point $a_j$, les autres restant inchangés.

L'utilisation de cette procédure de regroupement (ou "merging") nécessite l'introduction d'un critère de décision permettant de chiffrer le coût de l'opération et donc l'intérêt de la réaliser.

Soit {$x_k$} une suite de $l^2$ on appelle entropie spectrale de {$x_k$} :

$$H(x) = -\sum_k \frac{|x_k|^2}{\|x\|^2} \log \frac{|x_k|^2}{\|x\|^2} = \frac{\lambda(x)}{\|x\|^2} + \log\|x\|^2$$

avec

$$\lambda(x) = -\sum_k |x_k|^2 \log|x_k|^2$$

Alors

$$\exp(H(x)) = \|x\|^2 \exp\left(\frac{\lambda(x)}{\|x\|^2}\right)$$

est la dimension théorique de la suite {$x_k$}.

L'entropie permet de mesurer le nombre de termes significatifs dans la décomposition. Cette valeur constitue un critère intéressant pour évaluer le coût d'un regroupement. Bien évidement, ceci n'exclut pas l'utilisation d'autres critères pouvant conduire aux mêmes résultats.

L'algorithme de segmentation utilise une procédure de "recherche de la meilleure base" parmi une famille de bases orthonormées de $L^2(\mathbb{R})$. Ces bases sont obtenues à partir d'une segmentation arbitraire de l'axe temporel en intervalles dyadiques. Ces intervalles sont constuits dans une dynamique "fine to coarse". On part d'une base arbitraire (associée à une segmentation du signal) comprenant $2^l$ segments. On calcule le spectre local dans chaque intervalle. La dynamique consiste à supprimer certains points utilisés dans la segmentation et à remplacer deux intervalles dyadiques contigus $I_1$ et $I_2$ par l'intervalle dyadique $I = I_1 \cup I_2$. Et on poursuit récursivement l'opération.

Par exemple, supposons que la segmentation la plus fine (arbitraire) de l'intervalle I soit

$$I^l = \left[a_1^l, a_2^l\right] \cup \ldots \cup \left[a_{n-1}^l, a_n^l\right].$$

On calculera donc le spectre local sur les intervalles

$$I_j^l = \left[a_j^l, a_{j+1}^l\right].$$

Et on fera de même avec

$$I^{l-1} = \cup_{j=1} \left[a_{2j-1}^l, a_{2j+1}^l\right]$$

jusqu'à $I^o = I$.

Une fois cette opération effectuée, l'algorithme de recherche de la meilleure base peut être appliqué.

⊕ Recherche du spectre local adapté par minimisation de l'entropie

On dispose :

d'une partition temporelle sur plusieurs niveaux m = 0,1,...,max*l* et

$$[0, 2^N] = \bigcup_{0 \le j < 2l} I_j^l$$

d'un spectre local pour chaque intervalle $I_j^l$ au niveau $l$.

$$c_j^l = \{ c_{j,k}^l : 0 \le k < 2^{N-1} \}$$

La procédure récursive de division des intervalles en deux implique que

$$\left| I_j^l \right| = 2 \times \left| I_i^{l+1} \right|$$

Le spectre local adapté est obtenu par l'algorithme de minimisation de l'entropie présenté ci-dessous :

- initialiser avec le spectre local au niveau le plus bas (max*l*) :

$$a_j^o = c_j^o \, (Rq\!:\!m = 0 \Rightarrow l = maxl)$$

- calculer $a_j^m$ comme suit:

$$a_j^m = \begin{cases} c_j^m & \text{si } H(c_j^m) < H(a_{2j}^{m-1}) + H(a_{2j+1}^{m-1}), \\ a_{2j}^{m-1} \cup a_{2j+1}^{m-1} \text{ sinon} \end{cases}$$

pour m = 1,...,max*l*.

La division de l'intervalle temporel correspondant à ce spectre adapté est appelée : partition temporelle adaptée.

**1.3 Utilisation**

Selon l'invention, le signal S(t) est un "signal de forage", échantillonné sur un intervalle de temps [0,T].
D'après les résultats précédents, nous savons que chaque $S_j(t) \in \mathbb{L}^2 (I_j)$ peut être décomposé sur une base orthonormale d'ondes élémentaires :

$$S_j(t) = \sum_{0 \le k < n_j} c_k^j \varnothing_k^j(t)$$

$n_j$ étant le nombre d'échants de l'intervalle $I_j$ considéré, et $c_k^j$ les coefficients obtenus par DCT-IV. L'algorithme (analyse et reconstruction) peut se résumer de la façon suivante :

$$S_0(t) \xrightarrow{\ DCT-IV\ } c_k^0 \xrightarrow{\ DCT-IV\ } S_0(t)$$

$$S(t) \xrightarrow{\ FOLD\ } S_1(t) \xrightarrow{\ DCT-IV\ } c_k^1 \xrightarrow{\ DCT-IV\ } S_1(t) \xrightarrow{\ UNFOLD\ } S(t)$$

$$\vdots \qquad\qquad \vdots \qquad\qquad \vdots$$

$$S_{N-1}(t) \xrightarrow{\ DCT-IV\ } c_k^{N-1} \xrightarrow{\ DCT-IV\ } S_{N-1}(t)$$

Chaque coefficient $c_k^j$ donne l'amplitude de l'onde élémentaire qui lui est associée. Cette onde étant de période :

$$T_k = \frac{2\pi}{\omega_k}\text{avec } \omega_\kappa = \frac{\pi}{|I_j|}(k + \frac{1}{2}),$$

sa fréquence est donc :

$$F_k = \frac{\omega_k}{2\pi} = \frac{k+\frac{1}{2}}{2|I_j|}$$

La fréquence d'échantillonnage étant $\frac{n_j}{|I_j|}$ on a

$$0 \leq F_k < \frac{n_j + \frac{1}{2}}{2|I_j|}$$

Pour un signal échantillonné de manière uniforme sur $[0,T]$, chaque intervalle $I_j$ peut théoriquement contenir la même fréquence maximale.

Dans un segment donné, on étudie alors de manière plus précise le spectre des fréquences. On détermine d'abord l'index de la composante spectrale la plus importante :

$$c_{ko} = \max_{0 \leq k < n} |c_k| \qquad\qquad (9)$$

La fréquence $F_{ko}$ associée à $k_o$ est appelée fréquence fondamentale.

Ayant déterminé cette valeur, on supprime (en les mettant à zéro) tous les coefficients se trouvant dans son voisinage fréquentiel (i.e. tous les $c_k$ tels que $|k_o - k| < v$). Et on réitère l'opération.

La recherche des fréquences fondamentales associée à un intervalle donné se déroule donc de la manière suivante :

1. Rechercher dans la suite $\{c_k\}$ la valeur $k_i$ à l'aide de la relation (9)
2. Poser $c_k = 0$ si $|k_i - k| < v$, si $v$ fixé.
3. Retourner en (1) tant qu'il y a des coefficients non nuls ou tant que l'on a pas épuisé x% des coefficients les plus forts (Dans le deuxième cas, on élimine ainsi les "pics" les plus bas).

Il faut noter que les coefficients $c_k$ tels que $|k - k_i| < v$ . véhiculent une information qu'il est possible de résumer dans un paramètre. Ce paramètre sera le centre de masse $\mu_i$ associé à une fréquence fondamentale $F_{ki}$.

$$\mu_i = \frac{M_i}{E_i}$$

avec

$$E_i = \sum_{k=k_i-v}^{k=k_i+v} c_k^2 \quad \text{et} \quad M_i = \sum_{k=k_i-v}^{k=k_i+v} k c_k^2$$

Pour chaque intervalle, on peut donc avoir une liste $\{\mu_i, E_i\}$ pour les fréquences les plus énergétiques. Cette donnée entre alors dans la caractérisation des intervalles.

**1.4 Résumé**

**1.4.1 analyse du signal**

La méthode de segmentation peut donc comprendre les étapes suivantes :

- Définir la taille minimale d'un intervalle dans la décomposition ou le nombre maximum de niveaux (max$l$) (Sachant que $|I_j^0| = 2^{N-maxl}$).

- Prétraitement du signal à chaque niveau ($l = 0,...,maxl$)

$$S(t) \xrightarrow{\;FOLDING\;} \left\{ S_o^m(t),...,S_{2^l}^m(t) \right\}$$

par l'opérateur de "folding".

- Calculer le spectre local à chaque niveau :

$$\left\{ S_o^m(t),...,S_{2^l}^m(t) \right\} \xrightarrow{\;DCT-IV\;} \left\{ c_o^m(t),...,c_{2^l}^m(t) \right\}$$

en utilisant la DCT-IV.

- Selection du spectre local adapté par minimisation de l'entropie, et "calcul" de la partition temporelle adaptée correspondante.

- Réalisation d'une partition définitive en comparant les intervalles de la partition temporelle adaptée sur les critères suivants :

  - la fréquence fondamentale (et les fréquences principales),
  - les centres de masse (ou centres de fréquence),
  - les dimensions théoriques des segments,
  - autocorrélation, covariance...

Un comportement donné peut être caractérisé par des valeurs particulières pour ces différents paramètres. On peut ainsi connaître de manière précise un segment quelconque.

Ce procédé permet donc la segmentation du signal en partie les plus homogènes possibles, chaque segment pouvant être associé à un vecteur de paramètres facilement manipulable.

**1.4.2 Synthèse**

La segmentation peut être suivie des étapes :

- Reconstruire le signal prétraité à partir de la partition temporelle adaptée en utilisant la DCT-IV.

- Reconstruire le signal original à l'aide de l'opérateur "unfolding".

### 1.4.3 Compression

La reconstruction du signal peut se faire, par exemple, à partir de 5% des coefficients les plus énergétiques de chaque intervalle de la partition temporelle adaptée (voir la méthode de recherche des fréquences fondamentales pour la sélection des fréquences les plus énergétiques).

$$
\begin{aligned}
a_k^o &\xrightarrow{\;\;DCT-IV\;\;} S_0(t) \\
a_k^1 &\xrightarrow{\;\;DCT-IV\;\;} S_1(t) \xrightarrow{\;\;unfold\;\;} S(t) \\
&\;\;\vdots \\
a_k^{N-1} &\xrightarrow{\;\;DCT-IV\;\;} S_{N-1}(t)
\end{aligned}
$$

### Revendications

1. Méthode de transmission d'au moins un signal associé à des conditions de forage et/ou du comportement d'un élément d'une garniture de forage comportant un outil de forage entraîné en rotation, ledit signal étant fourni par au moins un capteur placé dans ladite garniture de forage, caractérisée en ce que ladite méthode comporte les étapes suivantes :

   - segmentation temporelle dudit signal par des moyens de segmentation,
   - décomposition en ondelettes Temps-Echelle ou Temps-Fréquence par des moyens de calculs fournissant des coefficients d'ondelette de chaque segment,
   - transmission d'au moins une partie desdits coefficients.

2. Méthode selon la revendication 1, caractérisée en ce que lesdites ondelettes Temps-Echelle sont des ondelettes de Morlet, orthogonale, biorthogonale ou dyadique.

3. Méthode selon la revendication 1, caractérisée en ce que lesdites ondelettes Temps-Fréquence sont des ondelettes de Malvar.

4. Méthode selon la revendication 1, caractérisée en ce que l'on sélectionne des coefficients caractéristiques de chaque segment.

5. Méthode selon la revendication 4, caractérisée en ce que lesdits coefficients caractéristiques sont les maxima locaux desdits coefficients d'ondelette.

6. Méthode selon la revendication 4, caractérisée en ce que lesdits coefficients caractéristiques sont les coefficients les plus énergétiques de chaque segment.

7. Méthode selon l'une des revendications 1 à 6, caractérisée en ce que l'on effectue une étape de quantification des coefficients à transmettre.

8. Méthode selon l'une des revendications 1 à 7, caractérisée en ce que l'on reconstruit au moins partiellement le signal d'origine à partir desdits coefficients.

9. Méthode selon l'une des revendications 1 à 8, caractérisée en ce que les moyens de segmentation, de calculs et de transmission sont situés dans le voisinage du capteur et en ce que la transmission a lieu entre lesdits moyens et la surface du sol.

10. Méthode selon la revendication 9, caractérisée en ce que l'on effectue un codage binaire desdits coefficients et en ce que la transmission est effectuée par pulsations dans un fluide ou par onde électromagnétique.

11. Système de transmission d'au moins un signal associé à des conditions de forage et/ou du comportement d'un élément d'une garniture de forage comportant un outil de forage entraîné en rotation, ledit signal étant fourni par au moins un capteur placé dans ladite garniture de forage, caractérisée en ce qu'il comporte:

- des moyens de segmentation dudit signal,
- des moyens de calculs fournissant des coefficients d'ondelette de chaque segment par décomposition en ondelettes Temps-Echelle ou Temps-Fréquence,
- des moyens de transmission d'au moins une partie desdits coefficients.

**12.** Système selon la revendication 11, caractérisé en ce qu'il comporte des moyens de codage en binaire desdits coefficients, lesdits moyens de segmentation, de calculs, de transmission et de codage étant dans le voisinage du capteur.


**Patentansprüche**

**1.** Verfahren zur Übertragung wenigstens eines Bohr- und/oder Verhaltensbedingungen zugeordneten Signals eines Elements einer Bohrgarnitur, die ein in Drehung versetztes Bohrwerkzeug umfaßt, wobei dieses Signal geliefert wird durch wenigstens einen in dieser Bohrgarnitur angeordneten Geber, dadurch gekennzeichnet, daß dieses Verfahren die folgenden Stufen umfaßt:

- zeitweise Segmentierung dieses Signals durch Segmentierungsmittel,
- Zerlegung in Zeit-Maßstab-Wavelets oder Zeit-Frequenz-Wavelets durch Rechnermittel, welche Wavelets-Koeffizienten jedes Segments liefern und
- Übertragung wenigstens eines Teils dieser Koeffizienten.

**2.** Verfahren nach Anspruch 1, dadurch gekennzeichnet, daß dieser Zeit-Maßstab-Wavelets Morlet-Wavelets vom Typ orthogonal, biorthogonal oder dyadisch sind.

**3.** Verfahren nach Anspruch 1, dadurch gekennzeichnet, daß diese Zeit-Frequenz-Wavelets Malvar-Wavelets sind.

**4.** Verfahren nach Anspruch 1, dadurch gekennzeichnet, daß man charakteristische Koeffizienten jedes Segments auswählt.

**5.** Verfahren nach Anspruch 4, dadurch gekennzeichnet, daß diese charakteristischen Koeffizienten die lokalen Maxima dieser Wavelet-Koeffizienten sind.

**6.** Verfahren nach Anspruch 4, dadurch gekennzeichnet, daß diese charakteristischen Koeffizienten die energetischsten Koeffizienten jeden Segments sind.

**7.** Verfahren nach einem der Ansprüche 1 bis 6,
dadurch gekennzeichnet, daß man eine Quanitifizierungsstufe der zu übertragenden Koeffizienten ausführt.

**8.** Verfahren nach einem der Ansprüche 1 bis 7,
dadurch gekennzeichnet, daß man wenigstens partiell das Ursprungssignal ausgehend von diesen Koeffizienten rekonstruiert.

**9.** Verfahren nach einem der Ansprüche 1 bis 8,
dadurch gekennzeichnet, daß die Segmentierungs-, Rechner- und Übertragungsmittel benachbart des Gebers angeordnet sind und daß die Übertragung zwischen diesen Mitteln und der Erdoberfläche stattfindet.

**10.** Verfahren nach Anspruch 9, dadurch gekennzeichnet, daß man eine binäre Kodierung dieser Koeffizienten durchführt und daß die Übertragung durch Pulsationen in einem Fluid oder über elektromagnetische Wellen vorgenommen wird.

**11.** System zur Übertragung wenigstens eines Bohr- und/oder Verhaltensbedingungen zugeordneten Signals eines Elements einer Bohrgarnitur, die ein in Drehung versetztes Bohrwerkzeug umfaßt, wobei das Signal durch wenigstens einen in dieser Bohrgarnitur angeordneten Geber geliefert wird,
dadurch gekennzeichnet, daß es umfaßt:

- Mittel zur Segmentierung dieses Signals,
- Rechnermittel, welche Wavelet-Koeffizienten jedes Segments durch Zerlegung in Zeit-Maßstab-Wavelets oder Zeit-Frequenz-Wavelets liefern und
- Mittel zur Übertragung wenigstens eines Teils dieser Koeffizienten.

12. System nach Anspruch 11, dadurch gekennzeichnet, daß es binäre Kodierungsmittel dieser Koeffizienten umfaßt, wobei die Segmentierungsmittel, Rechnermittel, Übertragungs- und Kodierungsmittel in der Nachbarschaft des Empfängers oder Gebers angeordnet sind.

**Claims**

1. A method of transmitting at least one signal associated with drilling conditions and/or the behaviour of an element of a drill string having a drill bit driven in rotation, said signal being supplied by at least one sensor positioned in said drill string, characterised in that said method incorporates the following steps:

   - a time segmentation of said signal by segmentation means,
   - decomposition into Time-Scale wavelets or Time-Frequency wavelets by computing means supplying wavelet coefficients for each segment,
   - transmission of at least some of said coefficients.

2. A method as claimed in claim 1, characterised in that said Time-Scale wavelets are orthogonal, biorthogonal or dyadic Morlet wavelets.

3. A method as claimed in claim 1, characterised in that said Time-Frequency wavelets are Malvar wavelets.

4. A method as claimed in claim 1, characterised in that characteristic coefficients of each segment are selected.

5. A method as claimed in claim 4, characterised in that said characteristic coefficients are the local maxima of said wavelet coefficients.

6. A method as claimed in claim 4, characterised in that said characteristic coefficients are the highest energy coefficients of each segment.

7. A method as claimed in one of claims 1 to 6, characterised in that a step is performed to quantify the coefficients to be transmitted.

8. A method as claimed in one of claims 1 to 7, characterised in that the original signal is at least partially reconstructed from said coefficients.

9. A method as claimed in one of claims 1 to 8, characterised in that the segmentation, computing and transmission means are located in the vicinity of the sensor and in that transmission is effected between said means and the surface.

10. A method as claimed in claim 9, characterised in that said coefficients are coded in binary and in that the transmission is effected by pulses through a fluid or by electro-magnetic wave.

11. A system of transmitting at least one signal associated with drilling conditions and/or the behaviour of an element of a drill string having a drill bit driven in rotation, said signal being supplied by at least one sensor located in said drill string, characterised in that it has:

   - means for segmenting said signal,
   - computing means for supplying the wavelet coefficients of each segment by decomposition into Time-Scale or Time-Frequency wavelets,
   - means for transmitting at least some of said coefficients.

12. A system as claimed in claim 11, characterised in that it has binary coding means for said coefficients, said segmentation, transmission and coding means being in the vicinity of the sensor.

## FIG.1A

## FIG.1B

FIG.2

FIG.3A

30

EP 0 684 363 B1

## FIG.3B

31

## FIG.4